# EUROPÄISCHE PATENTSCHRIFT

(11) **EP 0 581 092 B1**
(45) Veröffentlichungstag und Bekanntmachung des Hinweises auf die Patenterteilung: **24.09.1997**
(21) Anmeldenummer: 93111091.0
(22) Anmeldetag: 10.07.1993
(51) Int. Cl.: B29C 51/34, B29C 51/22

(54) **Verfahren zum Vakuumformen einer Zapfenplatte aus einer Kunststoffolie**
Vacuum-forming process for the production of a plastic plate provided with studs
Procédé de thermoformage pour la réalisation d'une plaque en plastique avec des pivots

(30) Priorität: 23.07.1992 DE 4224295; 12.09.1992 DE 4230577; 19.11.1992 DE 4238943
(43) Veröffentlichungstag der Anmeldung: 02.02.1994
(73) Patentinhaber: DUROTHERM KUNSTSTOFFVERARBEITUNG GmbH, D-72221 Haiterbach (DE)
(72) Erfinder: Wischemann, Heinrich, D-48607 Ochtrup (DE)
(74) Vertreter: Kinkelin, Ulrich, Dipl.-Ing.

(56) Entgegenhaltungen:
- DE-A- 1 929 878
- DE-A- 3 814 999
- FR-A- 2 187 512
- US-A- 3 126 582

## Beschreibung

Die Erfindung bezieht sich auf ein Verfahren gemäß dem Oberbegriff des Anspruchs 1.

Dieses Verfahren dient vorwiegend zur Herstellung von Zapfenplatten, die zur Vorfixierung von Kunststoffheizschläuchen für Fußbodenheizungen dienen. Hierbei wird ein Heizschlauch mäandrierend im Estrich eines Fußbodens eingebettet. Die Zapfenplatte ermöglicht einen gleichmäßigen Schlauchverlauf und hält vor allem den Schlauch fest, wenn der noch dünnflüssige Estrich aufgetragen wird. Damit der Schlauch nicht hochtreibt, muß er durch Vorsprünge der Hohlzapfen der Zapfenplatte überrastet werden.

Fertigungstechnisch bereiten diese Vorsprünge Probleme. Haben die Form-Zapfen der Positivform starr ausgebildete Form-Vorsprünge, dann müssen sich die Hohlzapfen beim Abziehen von der Positivform weiten, um darüber gleiten zu können. Hierbei können einerseits oft nur ungenügend weit vorragende Vorsprünge hergestellt werden, andererseits kann nur eine dünne Kunststoffolie eingeschränkter Kunststoffsorten verarbeitet werden. Man kann auch bewegliche Form-Vorsprünge in die Zapfen einbauen, die nach dem Formvorgang zurückgezogen oder zurückgeschwenkt werden. Dies ermöglicht zwar beste Formergebnisse, macht aber sehr teure Positivformen notwendig. Auch sind solche beweglichen Formteile störanfällig.

Aus der US-PS 3 126 582 ist ein Verfahren zum Vakuumformen einer Zapfenplatte aus einer Kunststoff-Folie unter Verwendung einer Positivform, die in vorgegebenen Positionen von einer Basisplatte hochstehende Hohlzapfen aufweist, bekannt. Jeder dieser Hohlzapfen weist an dessen oberen Umfangsrand wenigstens einen radial abstehenden Vorsprung auf. Dieser wird mittels eines elastischen Einsetzteils gebildet, der mit einem ersten Teil seiner Flachseite lose an der oberen Stirnfläche des zugehörigen Zapfens flach aufliegend gehalten ist und mit einem daran anschließenden zweiten Teil ihrer Flachseite über den Umfangsrand der Stirnfläche ragt und den Vorsprung 12 bildet.

Das Einsetzteil weist des weiteren einen zylindrischen Mittelabschnitt auf, in dem ein Gewindeeinsatz eingepreßt ist. Das Einsetzteil wird durch eine von unten in die Basisplatte einsetzbarre Schraube, die in den Gewindeeinsatz eingreift, in ihrer Position zu dem Hohlzapfen gehalten. Das Einsetzteil liegt in seinem Ausgangszustand mit dem ersten und zweiten Teil einer Stirnfläche des Hohlzapfens an, wobei eine zur Basisplatte weisende Fläche des Mittelabschnittes mit Abstand zu dem Hohlzapfen angeordnet ist.

Diese Anordnung weist jedoch den Nachteil auf, daß ein Austauschen des Einsetzteiles aufgrund der Zugänglichkeit von unten zu der Schraubverbindung erschwert ist. Dadurch ist grundsätzlich erforderlich, daß die gesamte Basisplatte aus ihrer Verarbeitungsposition herausgelöst werden muß, um die Zugänglichkeit zu der Befestigung des Einsetzteils zu ermöglichen. Darüber hinaus ist bei einer derartigen Anordnung nachteilig, daß die Schraube in einer definierten Position zu dem Gewindeeinsatz festgelegt sein muß, um Fehlstellungen des ersten und zweiten Teils des Einsetzteils zu vermeiden. Greift die Schraube beispielsweise zu weit in den Gewindeeinsatz ein, so hat dies zur Folge, daß der erste und zweite Teil in einer Ruhelage sich leicht nach oben biegen, da die Zugspannungen in dem Mittelabschnitt des biegeelastischen Einsetzteiles ein Aufbiegen der freien Enden bewirkt. Ebenso tritt eine Fehlstellung des Einsetzteiles zu dem Hohlzapfen dann auf, wenn die Schraube nicht genügend weit in den Gewindeeinsatz eingreift. Dadurch entsteht zwischen dem ersten und zweiten Teil des Einsetzteiles und der Stirnfläche des zugehörigen Formzapfens ein Luftspalt.

Beide nicht ordnungsgemäße Einstellungen führen dazu, daß während des Vakuumformens die Vorsprünge des Hohlzapfens nicht in zufriedenstellender Weise ausgebildet werden können. Der dabei nicht anliegende erste und zweite Teil des Einsetzteils kann während des Vakuumform-Vorganges aufgrund des Nichtanliegens an der Stirnfläche ausweichen.

Aufgabe der Erfindung ist es, ein Verfahren der gattungsgemäßen Art anzugeben, das es ermöglicht, Zapfenplatten mit Vorsprüngen der Hohlzapfen kostengünstig und zuverlässig herzustellen, wobei ausreichend große Vorsprünge bei ausreichend stabiler Kunststoffolie erzielt werden.

Diese Aufgabe wird durch die kennzeichnenden Merkmale des Anspruchs 1 gelöst.

Der Vorteil der Erfindung liegt darin, daß die Ausweichbewegung wie im System der beweglichen Form-Vorsprünge auf der Seite der Form stattfindet, so daß die Zapfenplatte nicht in einer Weise belastet wird, die ihrer eigentlichen Funktion zuwiderläuft. Andererseits ist keine komplizierte Betätigung und Steuerung der Form-Vorsprünge erforderlich, da diese aufgrund ihrer Ausbildung und Lage auf den Form-Zapfen zum einen genügend steif sind während des Formvorganges und zum anderen selbtsttätig nachgeben während des Entformens.

Die Ausgestaltungen gemäß der Ansprüche 2 bis 4 ergeben verschiedene Gestaltungen von Vorsprüngen.

Die Weiterbildungen nach den Ansprüchen 5 bis 7 ergeben eine Scheibenform, die das Ausweichen und Hochbiegen beim Entformen erleichtert.

Die Ausgestaltungen gemäß der Ansprüche 8 und 9 sind dazu bevorzugte Anpassungen an den Verwendungszweck der Heizschlauchfixierungen.

Die Variante nach Anspruch 10 hat einen Rationalisierungseffekt, als nämlich durch die Anordnung von zwei identischen Scheiben bedarfsweise die doppelte Anzahl von Form-Vorsprüngen erzielt wird.

Hierbei ergibt sich nach Anspruch 11 eine bevorzugte Anpassung an die Heizschlauchfixierung.

Die Ansprüche 12 bis 15 benennen praxisgerechte Ausgestaltungen.

Die Weiterbildung nach Anspruch 16 ergibt eine gewisse Nachgiebigkeit der Form-Vorsprünge an den freistehenden Ecken, so daß sich diese einerseits nicht durch die Kunststoffolie beim Formen hindurchbohren, andererseits leichter an der Innenwand der Hohlzapfen beim Entformen entlanggleiten. Damit kann auch eine größere Zapfenplatte mit z.B. 1 m² leichter von der Positivform abgezogen werden.

Gemäß der weiteren Ausgestaltung nach Anspruch 17 ist vorgesehen, die Scheibe aus Metall auszubilden, wie Federbronze, insbesondere Federstahl. Dies hat den Vorteil, daß die Scheibe bei ausreichender Steifigkeit dünn sein kann, so daß die Bauhöhe klein gehalten werden kann. Auch ist dieses Material in seinen Eigenschaften unempfindlich gegenüber den Arbeitstemperaturen beim Vakuumformen. Schließlich sind metallische Scheiben gute Wärmeleiter, die somit die Heizwärme von der Grundplatte und den Form-Zapfen, die ebenfalls aus Metall bestehen, gut übernehmen. Dadurch wird die Kunststoffolie auch an den kritischen Eckbereichen der Vorsprünge richtig temperiert gehalten.

Die Grundplatte der Positivform ist zunächst als ebene Platte aufzufassen, wenn auch die daran abgeformte Zapfenplatte dazu bestimmt ist, auf einen ebenen Fußboden gelegt zu werden.

Es hat sich jedoch gezeigt, daß eine leichte Krümmung der Zapfenplatte (bei einem Radius von beispielsweise 1 Meter) praktisch bedeutungslos ist, da sich eine solche Zapfenplatte aufgrund ihrer Elastizität problemlos an die Bodenform angleicht.

Es ist daher in einer weiteren Ausgestaltung gemäß Anspruch 18 vorgesehen, die Grundplatte der Positivform wenigstens als Zylindermantel-Abschnitt auszubilden, von dem aus die Form-Zapfen radial auswärts gerichtet hochstehen. Mit mehreren Zylindermantel-Abschnitten kann räumlich kompakt ein Mehrtakt-Werkzeug gebildet werden. Mit einer über den ganzen Zylinder-Umfang reichenden Grundplatte (die aus mehreren Abschnitten zusammengesetzt sein kann) ist auch die Herstellung von "Zapfenplatten" in der Form eines Endlosbandes beziehungsweise eines Bandes erheblich größerer Länge als Breite möglich.

So können beispielsweise auf einem zylinderförmigen Träger, der drehbar gelagert ist, drei umfangsmäßig im Abstand zueinander verteilte Grundplatten in der Form von Zylindermantel-Abschnitten angeordnet werden. Auf die erste Grundplatte wird in einer ersten Drehstellung die Kunststoffolie aufgezogen und geformt. Sodann wird der Träger um einen Arbeitstakt (120°) weitergedreht, so daß die zweite Grundplatte in diese Position zum Aufziehen einer Kunststoffolie gelangt, während die erste Grundplatte die folgende Position einnimmt, in der sie abgekühlt wird. Beim nächsten Arbeitstakt gelangt die dritte Grundplatte in die Position zum Aufziehen der Kunststoffolie, die zweite Grundplatte in die Abkühlposition und die erste Grundplatte in eine Entformposition, in der die geformte Zapfenplatte von der Positivform abgezogen wird. Schließlich wird mit einer weiteren Drehung des Trägers ein neuer Zyklus begonnen.

Mit einer lückenlos um den Träger reichenden Grundplatte kann bei kontinuierlicher Drehung eine Zapfenplatte in der Form eines langen Bandes geformt werden.

Die Erfindung wird nachstehend anhand von in der Zeichnung dargestellten Ausführungsbeispielen näher erläutert.

Es zeigt:
- Fig. 1: eine perspektivische Ansicht eines Teilbereichs einer Zapfenplatte,
- Fig. 2: eine Ansicht in Pfeilrichtung 2 von Fig. 1,
- Fig. 3: eine Seitenansicht auf einen Teilbereich der Positivform vor dem Formvorgang,
- Fig. 4: eine Darstellung kreuzförmiger Streifen mit Befestigungsmittel,
- Fig. 5: eine der Fig. 3 entsprechende Ansicht während des Entformvorgangs,
- Fig. 6: eine schematisch vereinfachte Anordnung eines Mehrtakt-Werkzeuges,
- Fig. 7: eine schematisch vereinfachte Anordnung eines Endlos-Werkzeuges,
- Fig. 8-11: schematisch vereinfacht verschiedene Scheibenformen,
- Fig. 12: schematisch vereinfacht verschiedene Formen der oberen Stirnfläche eines Form-Zapfens.

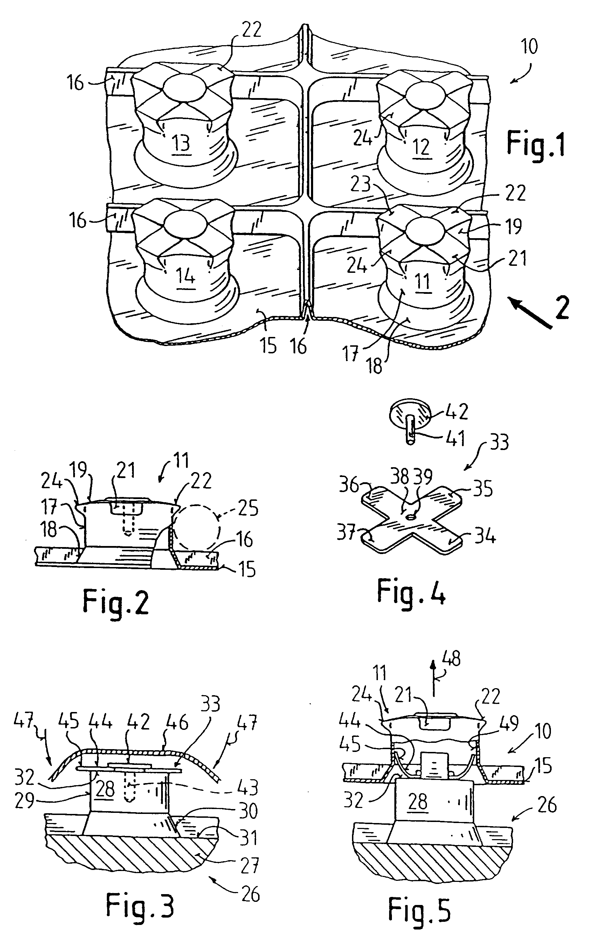

Die Fig. 1 zeigt von schräg oben einen Teilbereich einer Zapfenplatte 10 mit vier an den Eckpunkten eines Quadrats positionierten Hohlzapfen 11, 12, 13, 14, die untereinander im Rahmen der Fertigkeitsgenauigkeit gleich sind und aus einer Basisplatte 15 hoch ragen. Zwischen den Hohlzapfen sind in der Basisplatte 15 kreuzförmig verlaufende Versteifungsstege 16 eingeformt. Diese allgemeine Struktur wiederholt sich regelmäßig über die gesamte Zapfenplatte 10, die in verschiedenen Größen von z.B. 50 x 100 cm oder 100 x 100 cm hergestellt wird.

Stellvertretend wird der Hohlzapfen 11 (Fig. 2) näher beschrieben. Er hat einen etwa kreiszylindrischen Mantel 17, der unten über einen Kegelstumpfmantel 18 an die Basisplatte 15 anschließt. Oben hat der Hohlzapfen 11 eine Deckfläche 19. Am oberen Rand gleichmäßig verteilt sind vier Vorsprünge 21, 22, 23, 24, wodurch die Deckfläche 19 grob etwa einen 8-eckigen Umriß erhält. Die Vorsprünge sind so angeordnet, daß sie jeweils in Richtung zu vier Hohlzapfen der weiteren Nachbarschaft weisen. Zum Hohlzapfen 11 sind die Hohlzapfen 12 und 14 unmittelbar benachbart, während der Hohlzapfen 13 als zur weiteren Nachbarschaft gehörig anzusehen ist. Demnach weist beispielsweise der Vorsprung 23 zum Hohlzapfen 13.

Am Beispiel der Fig. 2 ist zu sehen, wie ein angedeuteter Schlauch 25 fixiert wird. Der Schlauch 25 ist in Fig. 1 nicht gezeichnet, man muß ihn sich diagonal in Pfeilrichtung 2 verlaufend denken. Er liegt unten auf den Versteifungsstegen 16, mit der linken Flanke an den kreiszylindrischen Mänteln 17 der Hohlzapfen 11 und 13 und mit der rechten Flanke am kreiszylindrischen Mantel 17 des Hohlzapfens 12 an. Weiterhin übergreift der Vorsprung 22 des Hohlzapfens 11 und ein gleichgerichteter Vorsprung 22 des Hohlzapfens 13 den Schlauch 25 von der einen Seite. Von der anderen Seite übergreift der Vorsprung 24 des Hohlzapfens 12 (in Fig. 2 nicht gezeichnet) den Schlauch 25, der einen Außendurchmesser von etwa 10 mm hat. Da sich diese Einspannung im Muster der Zapfenplatte längs des Schlauches 25 wiederholt, ist der Schlauch 25 über seinen ganzen Verlauf hin allseits fixiert, so daß er seine Lage ausreichend stabil beibehält, wenn dann der Estrich aufgebracht wird.

Die Fig. 3 zeigt nun einen zum Hohlzapfen 11 korrespondierenden Teilbereich einer Positivform 26. Sie besteht aus einer stabilen Grundplatte 27, von der mehrere gleichartige Form-Zapfen 28 hochragen. Jeder Form-Zapfen 28 hat einen etwa kreiszylindrischen Mantel 29 (die Gestalt eines Vierkantprismas oder Achtkantprismas wäre ebenso denkbar, doch läßt sich ein Kreiszylinder einfacher herstellen), der unten über einen Kegelstumpfmantel 30 an die ebene Oberseite 31 der Grundplatte 27 anschließt. Der kreiszylindrische Mantel 29 kann vorzugsweise sich nach oben zu leicht konisch verjüngend ausgebildet sein.

Oben hat der Form-Zapfen 28 eine senkrecht zur Zapfenachse stehende plane Stirnfläche 32, auf der eine Scheibe 33 liegt, die in Fig. 4 näher dargestellt ist. Diese Scheibe 33 ist in vier in rechtem Winkel zueinanderstehende Streifen 34, 35, 36 und 37 gegliedert, die strahlenförmig von einem Mittelteil 38 mit einem Zentralloch 39 ausgehen. Ein Bolzen 41 mit angeformtem flachem Kopf 42 dient zur Befestigung der Scheibe 33 an der Stirnfläche 32, indem der Bolzen 41 das Zentralloch 39 quert und in ein Axialloch 43 des Form-Zapfens 28 eingetrieben wird. Der Kopf 42 liegt dann flach auf dem Mittelteil 38.

Wenn die Stirnfläche 32 einen Radius von 9 mm hat, sind die Streifen 34 - 37 so lang, daß sie etwa 1 bis 3 mm, vorzugsweise 2 mm über ihren Umfangsrand hinausragen. Der Kopf 42 hat einen Radius von etwa 5 mm. Die Streifen haben eine Dicke von 0,5 bis 1 mm etwa und eine Breite von etwa 5 mm und bestehen aus elastisch biegbarem Material, vorzugsweise Kunststoff, insbesondere Siliconelastomer, der bei der Formtemperatur noch fest genug bleibt, oder aus elastischem Metall. Die äußeren Ecken der Streifen sind zweckmäßigerweise leicht verrundet. Die Scheibe 33 kann einfach aus einem Flachmaterial herausgestanzt werden. Es ist auch möglich, sie mit einem bolzenartigen Ansatz herzustellen, etwa als Spritzgußteil, womit der separate Bolzen 41 wegfällt.

Jeder Streifen 34 - 37 wird in seiner Einbaulage (Fig. 3 und 5) in drei funktionelle Teile gegliedert, wobei die Übergänge fließend sein können. Ein erster Teil 44 entspricht seiner biegbaren Länge vom Rand des Kopfes 42 bis zum Rand der Stirnfläche 32, wobei die Biegebewegung nur nach oben, von der Stirnfläche 32 weg, möglich ist. Ein zweiter Teil 45 entspricht dem über den Rand der Stirnfläche 32 ragenden Bereich. Ein dritter Teil ist gleich dem Mittelteil 38, der unter dem Kopf 42 festgeklemmt ist.

Die Biegesteifigkeit der Streifen ist durch geeignete Auswahl von Material, Dicke und Breite, so festgelegt, daß der zweite Teil 45 sich nur geringfügig nach unten wegbiegt, wenn eine zu formende vorgeheizte Kunststoffolie 46 unter dem saugenden Einfluß des Vakuums über den Form-Zapfen 28 gezogen wird, wie dies in Fig. 3 mit den Pfeilen 47 angedeutet ist. Dadurch werden die Vorsprünge 21 - 24 (Fig. 1) geformt. Wenn nach dem Formvorgang die aus der Kunststoffolie 46 entstandene Zapfenplatte 10 von der Positivform 26 in Pfeilrichtung 48 (Fig. 5) abgezogen wird, biegen sich die Streifen zumindest im Bereich ihres ersten Teiles 44 von der Stirnfläche 32 hoch, wobei der zweite Teil 45 beziehungsweise dessen Randkante an der Innenwand 49 des hier als Beispiel dargestellten Hohlzapfens 11 leicht anliegend entlanggleitet.

Bedingt durch die vorhin beschriebene Art der Positivform 26 und das daraus resultierende Herstellungsverfahren sind einige Charakteristika am Erzeugnis, der Zapfenplatte 10, feststellbar, wie die Fig. 1 zeigt. Zum einen sind dies die in der Deckfläche 19 sichtbaren Abdrücke der Streifen 34 - 37 und gegebenenfalls des Kopfes 42. Der Kopfabdruck fällt allerdings weg, wenn der Zapfen 41, wie schon angedeutet, einstückig an der Scheibe 33 angeformt wird. Die Streifenabdrücke lassen sich etwas kaschieren, wenn die freien Ecken auf der Stirnfläche 32 aufgefüttert werden, das heißt, wenn die kreuzförmige Scheibe 33 in eine korrespondierend kreuzförmige Vertiefung der Stirnfläche 32 eingebettet wird. Nicht kaschieren läßt sich jedoch eine gewisse Ungleichmäßigkeit der Krümmung der Deckfläche 19 im Bereich der Vorsprünge 21 - 24 an den vielen Hohlzapfen einer vollständigen Zapfenplatte. Dies liegt daran, daß sich die abgespreizten zweiten Teile 45 (Fig.3) der vielen Streifen eben nicht genau gleich wie absolut steife Formvorsprünge verhalten, sondern unterschiedlich nachgeben. Allein schon Spannungsunterschiede in der Kunststoffolie 46 durch leichte Temperaturunterschiede etwa zwischen Mitten- und Randbereichen verursachen eine meßbar unterschiedliche Krümmung.

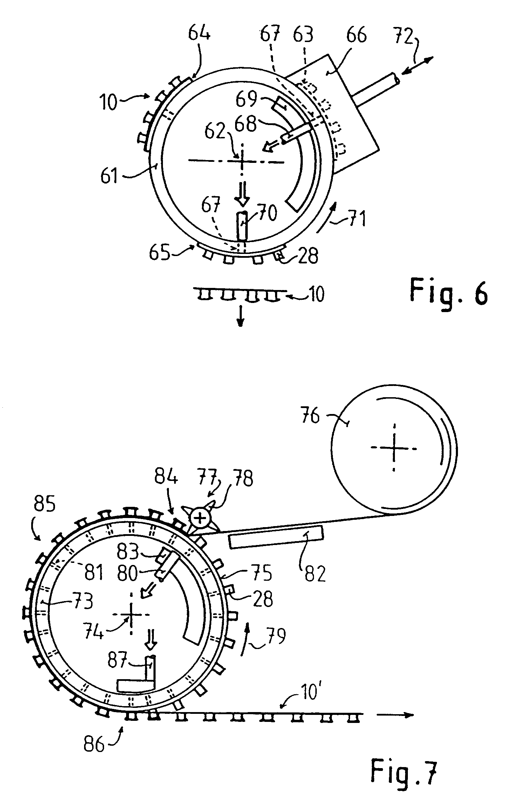

Gemäß Fig. 6 ist ein zylinderförmiger Träger 61 mit beispielsweise einem Radius und einer axialen Länge von jeweils 1 Meter in nicht besonders dargestellter Weise um eine ortsfeste Achse 62 drehbar gelagert. Auf dem Träger 61 sind drei gleiche Grundplatten 63, 64, 65 in der Form von Zylindermantel-Abschnitten so befestigt, daß` die daran angebrachten Form-Zapfen 28 radial auswärts gerichtet sind und die Grundplatten in jeweils um 120° gegeneinander umfangsmäßig verteilten Positionen angeordnet sind. In Umfangsrichtung erstreckt sich jede Grundplatte über eine Länge von etwa 1 Meter.

Die Grundplatte 63 befindet sich in der "Formposition", in der ein Formrahmen 66 darüber gestülpt ist, in dessen Innerem eine Kunststoffolie eingespannt ist. Diese wird durch Unterdruck seitens der Grundplatte 63 über die Form-Zapfen 28 gezogen. Dazu sind geeignete Luftkanäle der Grundplatte 63 über einen Kanal 67 im Träger 61 mit einer ortsfesten Saugleitung 68 verbunden, die zu einer nicht dargestellten Vakuumpumpe führt. Innerhalb des Trägers 61 befindet sich eine ortsfeste Heizeinrichtung 69, womit der Sektor des Träger 61 mit der Grundplatte 63 aufgeheizt wird.

Die Grundplatte 64 befindet sich in der "Kühlposition". Auf der Grundplatte mit den von ihr abstehenden Form-Zapfen ist die fertig geformte Zapfenplatte 10 aufgezogen, die hier die Möglichkeit hat, abzukühlen und fest zu werden.

Die Grundplatte 65 befindet sich in der "Entformposition". Hier wird über eine Druckleitung 70 Luft in die Luftkanäle über den auch hier ausgebildeten Kanal 67 eingeblasen, wodurch die Zapfenplatte 10 nach unten abgeworfen wird.

Die Ausbildung und Anordnung der Grundplatten samt Luftkanälen ist jeweils gleich, so daß mit jedem Arbeitstakt, mit dem der Träger 61 um 120° weiter in Pfeilrichtung 71 gedreht wird, eine zyklische Abfolge der Arbeitstake "Formen - Kühlen - Abwerfen" an jeder Grundplatte wirksam wird. Es versteht sich, daß der Formrahmen 66 vor jedem Drehschritt in Pfeilrichtung 72 zurückgezogen wird, so daß vor dem nächsten Formvorgang ein neues Folienstück eingesetzt werden kann.

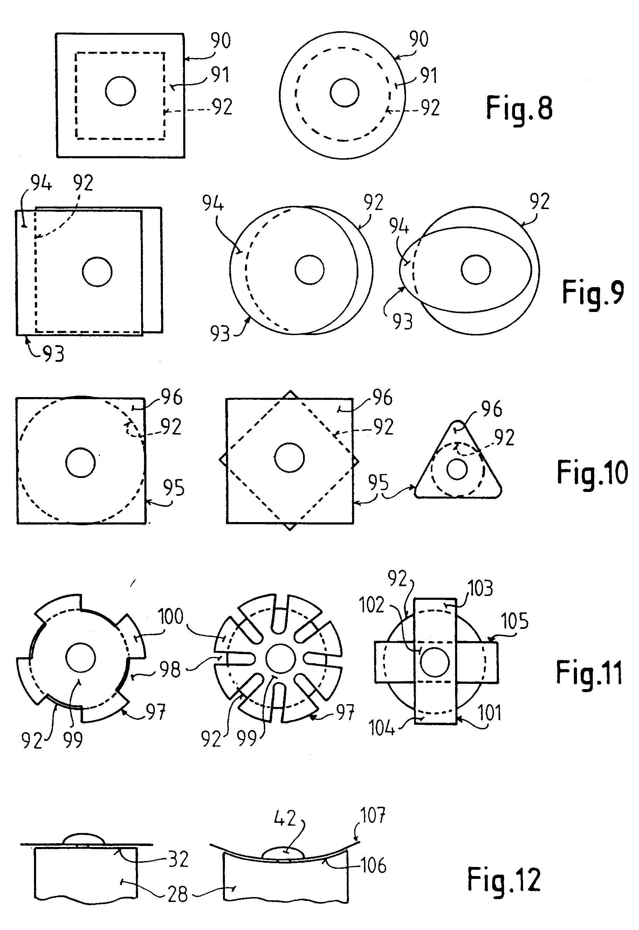

Gemäß Fig. 7 ist ein zylinderförmiger Träger 73 um eine ortsfeste Achse 74 drehbar gelagert. Auf ihm ist eine Grundplatte 75 in der Form eines vollständigen Zylindermantels befestigt, so daß die Form-Zapfen 28 radial auswärts gerichtet sind. Fertigungstechnisch günstig ist es, die Grundplatte 75 aus wenigstens zwei Schalenteilen zusammenzusetzen, die im montierten Zustand funktionell einen durchgehenden Zylindermantel bilden. Von einer Vorratsrolle 76 wird eine beispielsweise 1 Meter breite Kunststoffolie über eine Andrückeinrichtung 77 der Außenseite der Grundplatte 75 zugeführt. Die Andrückeinrichtung 77 hat umfangsmäßig verteilt mehrere Leisten 78, die beim Drehen des Trägers 73 in Pfeilrichtung 79 jeweils in die Lücken zwischen den Form-Zapfen 28 greifen. Sie drücken dabei die noch ungeformte Folie jeweils so weit zur Grundplatte 75, daß der Luftsog, der über eine Saugleitung 80 und einen der gleichmäßig verteilten Kanäle 81 des Trägers 73 im Bereich der Andrückeinrichtung 77 erzeugt wird, die Kunststoffolie erfassen kann. Die von einer Heizeinrichtung 82 vorgeheizte Folie wird dann durch den Sog über die Form-Zapfen 28 gezogen. Die Grundplatte 75 mit den Form-Zapfen 28 wird mittels einer stationär innerhalb des Trägers 73 angeordneten Heizeinrichtung 83 im Umfangssektor dieser "Formposition" 84 aufgeheizt. Der Träger 73 rotiert kontinuierlich, so daß stets neue Bereiche von Kunststoffolie zugeführt und geformt werden.

Bereits geformte Folie kann auf dem nachfolgenden Umfangssektor, der "Kühlposition" 85, abkühlen, um dann im unteren Umfangssektor, der "Entformposition" 86 von der Form getrennt zu werden. Dazu kann über eine stationäre Druckleitung 87 Druckluft in die dort gegenüberliegenden Kanäle 81 des Trägers 73 eingeblasen werden. Die fertig geformte Zapfenplatte 10, die hier in Form eines langen Bandes vorliegt, kann zu einer Rolle aufgewickelt werden bis zur späteren Verwendung.

Die Fig. 8 veranschaulicht Scheiben 90, die mit ihren zweiten Teilen 91 jeweils rund um den gesamten Umfangsrand 92 der Stirnfläche des Form-Zapfens ragen.

In Fig. 9 sind Beispiele gezeigt, wonach die Scheiben 93 mit ihren zweiten Teilen 96 jeweils nur über einen Teilbereich des Umfangsrandes 92 ragen.

Gemäß Fig. 10 ragen die Scheiben 95 mit ihren zweiten Teilen 96 über mehrere in Umfangsrichtung verteilte Teilbereiche des Umfangsrandes 92.

Den vorigen Beispielen gemeinsam ist, daß die Scheiben 90, 93, 95 eine einschnittlose Peripherie haben. Die Beispiele nach Fig. 11 hingegen zeigen Scheiben 97, die ausgehend von der Kreisform durch etwa radiale Einschnitte 98 gegliedert sind. Es entstehen dadurch von einem gemeinsamen ersten Teil 99 ausgehend mehrere zweite Teile 100, die über jeweils in Umfangsrichtung verteilte Teilbereiche des Umfangsrandes 92 ragen.

Eine Form der Untergliederung ist in Fig. 4 gezeigt, wonach vier zweite Teile in der Form von Streifen 34 - 37 entstehen, wobei die Scheibe 33 die Gestalt eines kreuzförmigen Gebildes erhält. Man kann aber auch, wie im rechten Bild der Fig. 11 veranschaulicht, eine streifenförmige Scheibe 101 verwenden, die von dem gemeinsamen zentralen ersten Teil 102 ausgehend nur zwei diametral abstehende zweite Teile 103, 104 aufweist. Falls man dennoch vier Vorsprünge erzielen will, kann man zwei solche streifenförmige Scheiben 101, 105 gekreuzt übereinanderlegen. Prinzipiell kann man eine solche Stapelanordnung auch bei anderen Scheibenformen, etwa denen nach Fig. 9, ebenfalls praktizieren.

Gemäß Fig. 12 ist ein Form-Zapfen 28 schematisch in der Seitenansicht gezeigt, auf dem irgendeine der vorhin gezeigten Scheiben befestigt ist. Dabei kann die obere Stirnfläche 32 planeben sein oder, wie die Stirnfläche 106, konkav gekrümmt. Diese Variante hat den Vorteil, daß der Kopf 42 des Bolzens tiefer liegt als die Form-Vorsprünge 107 und folglich auch die daran geformten Vorsprünge des Hohlzapfens die jeweils höchste Stelle des Hohlzapfens darstellen.

## Patentansprüche

1. Verfahren zum Vakuumformen einer Zapfenplatte (10) aus einer Kunststoffolie unter Verwendung einer Positivform (26), die in vorgegebenen Positionen von einer Basisplatte hochstehende Hohlzapfen (11) aufweist, wobei bei jedem Hohlzapfen jeweils an dessen oberem Umfangsrand wenigstens ein radial abstehender Vorsprung (21 vorgesehen ist, wobei
der Vorsprung (21, 22, 23, 24) mittels einer biegeelastischen Scheibe (33) gebildet wird, die mit einem ersten Teil (44) ihrer Flachseite lose an der oberen Stirnfläche (32) des zugehörigen Form-Zapfens (28) der Positivform (26) flach aufliegend gehalten ist und mit einem daran anschließenden zweiten Teil (45) ihrer Flachseite über den Umfangsrand der Stirnfläche (32) ragt und das die Biegesteifigkeit der Scheibe (33) derart festgelegt ist, daß der zweite Teil (45) im wesentlichen über den Umfangsrand der Stirnfläche (32) abgespreizt bleibt, wenn die Kunststoffolie (46) durch Vakuum über den Form-Zapfen (28) gezogen wird, wodurch der Vorsprung (21, 22, 23, 24) geformt wird, daß hingegen zumindest der erste Teil (44) sich von der Stirnfläche (32) hochbiegt, wenn der fertig geformte Hohlzapfen (11) nach oben vom Form-Zapfen (28) abgezogen wird, wobei der zweite Teil (45) an der Innenwand (49) des Hohlzapfens (11) entlanggleitet, dadurch gekennzeichnet, daß ein Mittelteil (38) der biegeelastischen Scheibe (33) von einem Befestigungselement (41, 42) zu der Stirnfläche (32) festgelegt und in ständigem Kontakt zu der Stirnfläche (32) niedergehalten ist und daß das Befestigungselement (41, 42) außerhalb von dem zugehörigen Form-Zapfen (28) an diesem anbringbar ist.

2. Verfahren nach Anspruch 1, dadurch gekennzeichnet, daß die Scheibe (90) mit ihrem zweiten Teil (91) rund um den gesamten Umfangsrand (92) der Stirnfläche des Form-Zapfens ragt.

3. Verfahren nach Anspruch 1, dadurch gekennzeichnet, daß die Scheibe (93) mit ihrem zweiten Teil (94) nur über einen Teilbereich des Umfangsrandes (92) der Stirnfläche des Form-Zapfens ragt.

4. Verfahren nach Anspruch 1, dadurch gekennzeichnet, daß die Scheibe (95) mit ihrem zweiten Teil über mehrere in Umfangsrichtung verteilte Teilbereiche des Umfangsrandes (92) des Form-Zapfens ragt.

5. Verfahren nach Anspruch 1, dadurch gekennzeichnet, daß die Scheibe (97, 101) in Umfangsrichtung untergliedert ist, so daß an einen gemeinsamen ersten Teil (99, 102) mehrere zweite Teile (100) anschließen, die über jeweils in Umfangsrichtung verteilte Teilbereiche des Umfangsrandes (92) des Form-Zapfens ragen.

6. Verfahren nach Anspruch 5, dadurch gekennzeichnet, daß die Untergliederung der Scheibe (97) durch Randeinschnitte (98) bewirkt wird, die sich von der Peripherie der Scheibe in Richtung zu deren Zentrum erstrecken.

7. Verfahren nach Anspruch 6, dadurch gekennzeichnet, daß sich die Randeinschnitte (98) bis in die Nähe des Zentrums erstrecken.

8. Verfahren nach Anspruch 5 oder 6, dadurch gekennzeichnet, daß durch die Untergliederung vier zweite Teile in der Form von Streifen (34, 34, 36, 37) gebildet werden, wobei die Scheibe (33) die Gestalt eines kreuzförmigen Gebildes erhält, welches mit seinem Mittelteil (38) im Zentrum der Stirnfläche (32) fixiert ist.

9. Verfahren nach Anspruch 8, dadurch gekennzeichnet, daß die vier Streifen (34, 35, 36, 37) an einem Form-Zapfen (28) derart befestigt sind, daß sie jeweils in Richtung zu vier Form-Zapfen der weiteren Nachbarschaft weisend über die Stirnfläche (32) ragen.

10. Verfahren nach Anspruch 1, dadurch gekennzeichnet, daß zwei oder mehr Form-Vorsprünge durch zwei biegeelastische Scheiben (101, 105) gebildet werden, die mit Teilbereichen ihrer ersten Teile (102) ihrer Flachseiten aneinanderliegend an der oberen Stirnfläche des Form-Zapfens gehalten sind und mit ihren zweiten Teilen (103, 104) ihrer Flachseiten jeweils über verschiedene Teilbereiche des Umfangsrandes (92) des Form-Zapfens ragen.

11. Verfahren nach Anspruch 10, dadurch gekennzeichnet, daß die beiden Scheiben in der Form von Streifen (101, 105) gebildet werden, die in Gestalt eines kreuzförmigen Gebildes mit ihren Mittelteilen (102) aufeinanderliegend im Zentrum der Stirnfläche des Form-Zapfens fixiert sind.

12. Verfahren nach Anspruch 1, dadurch gekennzeichnet, daß der zweite Teil (45) der Scheibe (33) etwa 1 bis 3 mm über den Umfangsrand der Stirnfläche (32) ragt.

13. Verfahren nach Anspruch 1, dadurch gekennzeichnet, daß der Form-Zapfen (28) einen etwa kreisförmigen Querschnitt hat.

14. Verfahren nach Anspruch 1, dadurch gekennzeichnet, daß die Stirnfläche (32) des Form-Zapfens (28) planeben ausgebildet ist.

15. Verfahren nach Anspruch 1, dadurch gekennzeichnet, daß die Stirnfläche (106) des Form-Zapfens (28) konkav ausgebildet ist.

16. Verfahren nach Anspruch 1, dadurch gekennzeichnet, daß die Scheibe (33) aus Kunststoff, insbesondere einem Siliconelastomer, besteht.

17. Verfahren nach Anspruch 1 oder 5 oder 11, dadurch gekennzeichnet, daß die Scheibe (33) aus Metall, insbesondere Federstahl, besteht.

18. Verfahren nach einem der vorstehenden Ansprüche, dadurch gekennzeichnet, daß die Grundplatte (63, 64, 65; 75) der Positivform wenigstens als Zylinder-Mantel-Abschnitt ausgebildet ist, von dem aus die Form-Zapfen (28) radial auswärts gerichtet hochstehen.

## Claims

1. Method of vacuum forming a studded panel (10) from a sheet of plastic using a positive mould (26) which has, in predetermined positions, hollow studs (11) rising up from a base panel, at least one radially protruding projection (21) being provided in the case of each hollow stud, on its upper circumferential edge in each case, the projection (21, 22, 23, 24) being formed by means of a flexible plate (33) which is held, by a first part (44) of its flat side, loosely resting flat on the upper end face (32) of the associated mould stud (28) of the positive mould (26) and protrudes, by a second part (45) of its flat side, adjoining the first part, over the circumferential edge of the end face (32) and establishes the flexibility of the plate (33) in such a way that the second part (45) remains substantially spread over the circumferential edge of the end face (32) when the sheet of plastic (46) is drawn by vacuum over the mould stud (28), whereby the projection (21, 22, 23, 24) is moulded, whereas at least the first part (44) bends up from the end face (32) when the finished moulded hollow stud (11) is drawn away upwards from the mould stud (28), the second part (45) sliding along the inside wall (49) of the hollow stud (11), characterized in that a central part (38) of the flexible plate (33) is fixed by a fastening element (41, 42) with respect to the end face (32) and is held down in constant contact with respect to the end face (32) and in that the fastening element (41, 42) can be brought up against the associated mould stud (28) from outside the latter.

2. Process according to Claim 1, characterized in that the disc (90) projects with its second part (91) around the entire circumferential edge (92) of the end face of the mould stud.

3. Process according to Claim 1, characterized in that the disc (93) projects with its second part (94) only over a partial region of the circumferential edge (92) of the end face of the mould stud.

4. Process according to Claim 1, characterized in that the disc (95) projects with its second part over a plurality of partial regions, distributed in the circumferential direction, of the circumferential edge (92) of the mould stud.

5. Process according to Claim 1, characterized in that the disc (97, 101) is subdivided in the circumferential direction so that there are connected to a common first part (99; 102) a plurality of second parts (100) which project over partial regions, in each case distributed in the circumferential direction, of the circumferential edge (92) of the mould stud.

6. Process according to Claim 5, characterized in that the subdivision of the disc (97) is effected by edge incisions (98) which extend from the periphery of the disc towards its centre.

7. Process according to Claim 6, characterized in that the edge incisions (98) extend to the vicinity of the centre.

8. Process according to Claim 5 or 6, characterized in that, on account of the subdivision, four second parts are formed in the form of strips (34, 35, 36, 37), the disc (33) taking on the form of a cross-shaped structure which is fixed with its centre part (38) in the centre of the end face (32).

9. Process according to Claim 8, characterized in that the four strips (34, 35, 36, 37) are fastened on a mould stud (28) in such a manner that they project over the end face (32) in each case facing towards four mould studs of the more remote vicinity.

10. Process according to Claim 1, characterized in that two or more mould projections are formed by two flexible elastic discs (101, 105) which are held with partial regions of their first parts (102) of their flat sides lying against one another on the upper end face of the mould stud and project, with their second parts (103, 104) of their flat sides, in each case over various partial regions of the circumferential edge (92) of the mould stud.

11. Process according to Claim 10, characterized in that the two discs are formed in the form of strips (101, 105) which are fixed in the form of a cross-shaped structure, with their centre parts (102) lying one on top of the other, in the centre of the end face of the mould stud.

12. Process according to Claim 1, characterized in that the second part (45) of the disc (33) projects approximately 1 to 3 mm over the circumferential edge of the end face (32).

13. Process according to Claim 1, characterized in that the mould stud (28) has an approximately circular cross-section.

14. Process according to Claim 1, characterized in that the end face (32) of the mould stud (28) is designed so as to be flat.

15. Process according to Claim 1, characterized in that the end face (106) of the mould stud (28) is designed so as to be concave.

16. Process according to Claim 1, characterized in that the disc (33) consists of plastic, in particular of a silicone elastomer.

17. Process according to Claim 1 or 5 or 11, characterized in that the disc (33) consists of metal, in particular spring steel.

18. Process according to one of the preceding claims, characterized in that the baseplate (63, 64, 65; 75) of the positive mould is designed at least as a cylinder barrel section from which the mould studs (28) stand up directed radially outwards.

## Revendications

1. Procédé de formage sous vide d'une plaque de pivots (10) à partir d'une feuille de plastique en utilisant un moule positif (26), qui présente, dans des positions prédéfinies, des pivots creux (11) saillants depuis une plaque de base, au moins une saillie (21) se projetant radialement étant prévue, pour chaque pivot creux, à chaque fois sur son bord périphérique supérieur, la saillie (21, 22, 23, 24) étant formée au moyen d'un disque élastique en flexion (33), qui est maintenu à plat avec une première partie (44) de son côté plat disposée librement sur la face frontale supérieure (32) du pivot de moulage associé (28) du moule positif (26), et dépasse du bord périphérique de la face frontale (32) avec une deuxième partie (45) de son côté plat s'y raccordant, et la rigidité en flexion du disque (33) étant fixée de telle sorte que la deuxième partie (45) reste essentiellement soutenue par le bord périphérique de la face frontale (32), lorsque la feuille de plastique (46) est étirée sous vide par-dessus le pivot de moulage (28), la saillie (21, 22, 23, 24) étant ainsi formée, et que par contre au moins la première partie (44) se cambre depuis la face frontale (32), lorsque le pivot creux issu du moulage (11) est tiré vers le haut depuis le pivot de moulage (28), la deuxième partie (45) glissant le long de la paroi interne (49) du pivot creux (11), caractérisé en ce qu'une partie centrale (38) du disque élastique en flexion (33) est fixée à la face frontale (32) par un élément de fixation (41, 42) et est maintenue en contact constant avec la face frontale (32), et en ce que l'élément de fixation (41, 42) peut être monté en dehors du pivot de moulage associé (28) contre celui-ci.

2. Procédé selon la revendication 1, caractérisé en ce que le disque (90) dépasse avec sa deuxième partie (91) tout autour du bord périphérique complet (92) de la face frontale du pivot de moulage.

3. Procédé selon la revendication 1, caractérisé en ce que le disque (93) ne dépasse avec sa deuxième partie (94) que sur une zone partielle du bord périphérique (92) de la face frontale du pivot de moulage.

4. Procédé selon la revendication 1, caractérisé en ce que le disque (95) dépasse avec sa deuxième partie sur plusieurs zones partielles, réparties dans le sens périphérique, du bord périphérique (92) du pivot de moulage.

5. Procédé selon la revendication 1, caractérisé en ce que le disque (97, 101) est divisé dans le sens périphérique, de sorte que plusieurs deuxièmes parties (100), qui dépassent à chaque fois des zones partielles, réparties dans le sens périphérique, du bord périphérique (92) du pivot de moulage, se raccordent à une première partie commune (99, 102).

6. Procédé selon la revendication 5, caractérisé en ce que la division du disque (57) est effectuée par des entailles latérales (98), qui s'étendent depuis la périphérie du disque dans la direction de son centre.

7. Procédé selon la revendication 6, caractérisé en ce que les entailles latérales (98) s'étendent jusqu'à proximité du centre.

8. Procédé selon la revendication 5 ou 6, caractérisé en ce qu'il est formé, par le biais de la division, quatre deuxièmes parties en forme de bandes (34, 35, 36, 37), le disque (33) prenant la configuration d'une structure en forme de croix, qui est fixée avec sa partie centrale (38) au centre de la face frontale (32).

9. Procédé selon la revendication 8, caractérisé en ce que les quatre bandes (34, 35, 36, 37) sont fixées à un pivot de moulage (28) de telle sorte qu'elles dépassent de la face frontale (32) à chaque fois dans la direction de quatre pivots de moulage avoisinants.

10. Procédé selon la revendication 1, caractérisé en ce que deux saillies de moulage ou plus sont formées par deux disques élastiques en flexion (101, 105), qui sont maintenus avec des zones partielles de leurs premières parties (102) de leur côté plat l'une contre l'autre sur la face frontale supérieure du pivot de moulage, et dépassent avec leurs deuxième parties (103, 104) de leur côté plat à chaque fois de zones partielles différentes du bord périphérique (92) du pivot de moulage.

11. Procédé selon la revendication 10, caractérisé en ce que les deux disques sont formés en forme de bandes (101, 105), qui sont fixées en prenant la configuration d'une structure en forme de croix avec leurs parties centrales (102) l'une sur l'autre au centre de la face frontale du pivot de moulage.

12. Procédé selon la revendication 1, caractérisé en ce que la deuxième partie (45) du disque (33) dépasse d'environ 1 à 3 mm du bord périphérique de la face frontale (32).

13. Procédé selon la revendication 1, caractérisé en ce que le pivot de moulage (28) a une section transversale approximativement circulaire.

14. Procédé selon la revendication 1, caractérisé en ce que la face frontale (32) du pivot de moulage (28) a une configuration plane.

15. Procédé selon la revendication 1, caractérisé en ce que la face frontale (106) du pivot de moulage (28) a une configuration concave.

16. Procédé selon la revendication 1, caractérisé en ce que le disque (33) se compose de plastique, en particulier d'un élastomère silicone.

17. Procédé selon la revendication 1 ou 5 ou 11, caractérisé en ce que le disque (33) se compose de métal, en particulier d'acier à ressorts.

18. Procédé selon l'une quelconque des revendications précédentes, caractérisé en ce que la plaque de base (63, 64, 65; 75) du moule positif a la forme d'une section de gaine cylindrique, de laquelle saillent les pivots de moulage (28) orientés radialement vers l'extérieur.
